# EUROPÄISCHE PATENTSCHRIFT

(11) **EP 2 107 289 B1**
(45) Veröffentlichungstag und Bekanntmachung des Hinweises auf die Patenterteilung: **05.06.2013**
(21) Anmeldenummer: 08006752.3
(22) Anmeldetag: 02.04.2008
(51) Int. Cl.: F16L 5/04, H02G 3/22

(54) **Schott für eine Bauteildurchführung**
Partition for a component feed-through
Cloison pour un passage de composant

(43) Veröffentlichungstag der Anmeldung: 07.10.2009
(73) Patentinhaber: Felix Schuh & Co. GmbH, 45307 Essen (DE)
(72) Erfinder: Korth, Heinz, Dr.-Ing., 45130 Essen (DE)
(74) Vertreter: Grünecker, Kinkeldey, Stockmair & Schwanhäusser

(56) Entgegenhaltungen:
- EP-A2- 0 492 248
- DE-A1- 19 718 876
- US-A- 4 936 064

## Beschreibung

Die Erfindung bezieht sich auf ein Schott für eine Bauteildurchführung, der im Oberbegriff von Anspruch 1 erläuterten Art, bekannt aus der US-A-4936064.

Die DE 197 18 876 betrifft thermisch expandierbare Brandschutzmassen bzw. Brandschutzlaminate, die Blähgraphit und polymere Substanzen enthalten. Diese Brandschutzmassen bzw. Brandschutzlaminate sollen auf der Basis von Textilien als Trägermaterialien hergestellt werden. Als Anwendungszweck wird der Baubereich, beispielsweise als Innenschicht für Brandschutztüren oder für Deckenkonstruktionen angegeben.

Die EP 0 492 248 beschreibt ein intumeszierendes Flächengebilde, das als Brandschutz eingesetzt werden kann. Das Material kann in Form von flächigen Abdeckungen, Tapeten, Wickeln oder geschneiderten Säcken, Dichtungen, Hülsen, Klebebändern und Füllungen eingesetzt werden. Auch die Abdichtung von Kabeldurchbrüchen ist als Anwendungszweck angegeben. Wie diese Kabeldurchbrüche jedoch abgedichtet werden, ist der Druckschrift nicht zu entnehmen.

Aus Brandschutzzwecken müssen Durchführungen von Leitungselementen, wie beispielsweise Rohre oder Kabel oder dergleichen, durch Wände oder Decken mit einer sog. Abschottung oder einem Schott versehen werden, um zu verhindern, dass sich im Brandfall Flammen und insbesondere Rauch und Gase von Raum zu Raum oder über Geschosse ausbreiten können. Das Schott kann als Weichschott oder Hartschott ausgeführt werden. Ein Weichschott besteht beispielsweise aus einer Mineralfaserplatte mit BrandschutzBeschichtung und Brandschutz-Spachtel. Der Hauptbestandteil eines Hartschotts ist ein Brandschutzmörtel. Die herkömmlichen Schotts bieten bei Durchführungen durch massive Wände oder Decken mit einer ausreichenden Stärke, wie sie in massiv gemauerten Gebäuden vorgefunden werden, keine Probleme. Probleme bereiten jedoch Bauteildurchführungen durch sehr dünnwandige Bauteile, wie sie beispielsweise bei Eisenbahnwagons oder auf Schiffen auftreten können. Bisher mussten bei derartigen dünnwandigen Bauteilen, z.B. Bauteile von ca. 20mm Dicke, eine aufwändige Konstruktion durch Aufdopplung, d.h. durch Wandstärkenerhöhung, vorgesehen werden.

Der Erfindung liegt die Aufgabe zugrunde, ein konstruktiv einfaches und einfach zu erstellendes Schott bereitzustellen, das sich auch für dünnwandige Bauteile eignet.

Die Aufgabe wird durch die im Anspruch 1 angegebenen Merkmale gelöst.

Durch die erfindungsgemäße Verwendung von wenigstens einer Brandschutzlage aus einem flächigen Träger mit im Brandfall aufschäumender Beschichtung für die Überspannung der Durchtrittsöffnung für die Leitungselemente, wie beispielsweise Rohre oder Kabel, kann der erforderliche Brandschutz auch mit einem sehr dünnwandigen Schott erreicht werden, das auch in dünnen Bauteilen montierbar ist. Beschichtete Matten oder Bahnen sind handelsüblich und können in den unterschiedlichsten Ausgestaltungen eingesetzt werden. Eine Nachbelegung ist ohne weiteres möglich.

Die Brandschutzlage ist an einer Tragkonstruktion befestigt und gegen mechanische Beanspruchungen durch eine Abdeckung an der mechanisch beanspruchten Seite geschützt.

Als Träger eignet sich jedes dünne, flexible Material, das nicht brennbar ist und beispielsweise ein Fasergebilde, bevorzugt ein Trägergewebe sein kann.

Auch die Abdeckung kann mit einer Schicht aus einem Dämmschichtbildner versehen werden.

Die durch das Schott hindurchgeführten Leitungselemente sind bevorzugt, wenigstens im Bereich der Bauteildurchführung mit einem Brandschutz-Anstrich und/oder einer Brandschutzumhüllung versehen.

Ein Ausführungsbeispiel der Erfindung wird nachfolgend anhand der Zeichnungen näher erläutert. Es zeigen.
- Fig. 1: einen Querschnitt durch ein erfindungsgemäß ausgebildetes Schott, und

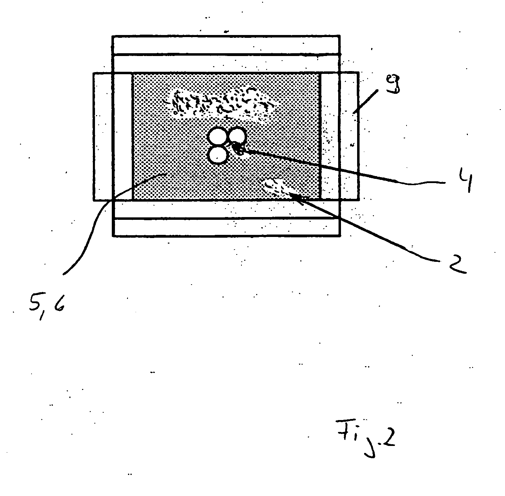

- Fig. 2: eine Seitenansicht des Schotts gemäß Fig. 1.

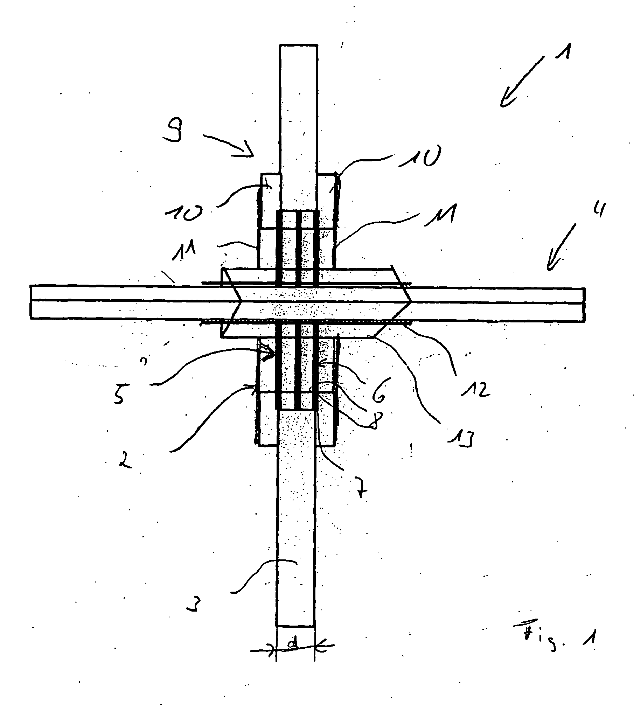

Fig. 1 zeigt ein erfindungsgemäß ausgebildetes Schott 1 zur Abdichtung einer Durchführungsöffnung 2 in einem Bauteil 3, das im dargestellten Ausführungsbeispiel eine Wand, d.h. ein senkrechtes, plattenförmiges Bauteil ist. Das Bauteil 3 kann eine sehr geringe Dicke d im Bereich von unter 10cm sein, beispielsweise eine der üblichen Wanddicken von 2cm im Schiffsbau oder im Wagonbau, kann jedoch auch die übliche Dicke von Mauerwerksdurchführungen oder dergleichen haben. Derartige dünnwandige Bauteile 3 können aus Plattenkonstruktionen, z.B. aus Metall, Kalzium-Silikat- oder Gipskartonplatten oder ähnlichen Materialien bestehen. Durch die Öffnung 2 werden Leitungselemente 4 hindurchgeführt, die Kabel, ummantelt oder nicht ummantelt, Rohre, brennbar oder nicht brennbar, oder dergleichen sein können.

Die Öffnung 2 im Bauteil 3 wird durch ein Brandschutzmaterial 5 überspannt, das wenigstens eine Brandschutzlage 6 enthält. Im dargestellten Ausführungsbeispiel enthält das Brandschutzmaterial drei Brandschutzlagen 6 und besteht bevorzugt nur aus diesen Brandschutzlagen 6. Die Anzahl der Lagen hängt von den Eigenschaften des verwendeten Materials und der Ausbildung des Bauteils 3 und der Öffnung 2 ab. Ggf. können Abstandshalter, Spanner oder dergleichen als Hilfselemente zusätzlich vorgesehen sein. Das Brandschutzmaterial 5, d.h. dasjenige Material, das den Brandschutz gewährleistet, wird jedoch durch die wenigstens eine Brandschutzlage 6 gebildet.

Die Brandschutzlage 6 besteht aus einem flächigen Träger 7 in Form einer Bahn oder Matte, der ein- oder beidseitig mit einem Dämmschicht bildenden Material 8 beschichtet ist. Der Träger 7 ist flexibel, biegbar und nicht starr, und kann in unterschiedlichen Qualitäten oder Dicken eingesetzt werden. Derartige beschichtete Bahnen oder Matten sind im Handel erhältlich, beispielsweise als "Kabelvollbandage" oder als "Intumeszierende Matte" bekannt (s. beispielsweise DE 197 18 876 oder DE 197 18 876 oder EP 1 589 157).

Der Träger 7 der Brandschutzlage 6 besteht bevorzugt aus einem Fasergebilde, wie beispielsweise ein Gewebe, ein Vlies, ein Filz oder dergleichen aus unbrennbaren Fasern, wie beispielsweise Glasfasern. Es sind verschiedene Ausgestaltungen mit und ohne freiem Zwischenraum zwischen den Fasern oder Fäden möglich.

Die Beschichtung 8 besteht aus einem im Brandfall aufschäumenden Dämmschichtbildner unter Verwendung von Blähgraphit. Der Träger 7 ist im dargestellten Ausführungsbeispiel beidseitig beschichtet, d.h. die Beschichtung 8 weist zu beiden Seiten des Bauteils 3. Werden mehrere Brandschutzlagen 6 eingesetzt, so sollte zwischen ihnen ein ausreichender Abstand bestehen, um ein Aufschäumen der Beschichtung 8 zu gewährleisten.

Die Befestigung des Brandschutzmaterials (5) erfolgt mit Hilfe einer Tragkonstruktion 9, die im dargestellten Ausführungsbeispiel einen Rahmen 10 um die Öffnung 2 herum enthält. Bevorzugt sind beidseitig des Bauteils 3 jeweils ein Rahmen 10 vorgesehen. Der oder die Rahmen 10 klemmen oder verbinden die Umfangsseiten des Brandschutzmaterials 5 mit dem die Öffnung 2 umgebenden Bereich des Bauteils 3, wobei der Rahmen 10 über das Bauteil 3 und ggf. bis über die Öffnung 2 reicht.

Sind mechanische Beschädigungen zu befürchten, so enthält die Tragkonstruktion 9 eine Abdeckung 11 aus mechanisch stabilem Material, beispielsweise einem Metallblech, die die Brandschutzlage 6 zumindest an einer Seite des Brandschutzmaterials 5 überdeckt und entweder vom Rahmen 10 gehalten wird oder selbst als Tragkonstruktion für das Brandschutzmaterial 5 dient. Sind mechanische Beschädigungen von beiden Seiten zu befürchten, so kann die Abdeckung 11, wie Fig. 1 zeigt, auch beidseitig vorgesehen sein. Die Abdeckung 11 kann, bevorzugt wenigstens an der dem Brandschutzmaterial 5 zugewandten Seite, ebenfalls mit einer Brandschutzbeschichtung versehen sein.

Die Leitungselemente 4 werden, wie dies bei Schotts üblich ist, durch Öffnungen im Brandschutzmaterial 5 und die ggf. vorgesehenen Abdeckungen 11 geführt. Zur Verbesserung der Brandschutzwirkung kann das Leitungselement 4 mit einem üblichen Brandschutzanstrich 12 versehen sein, der sich über eine axiale Länge erstreckt, die die Breite d des Bauteils 3 um einen vorbestimmten Sicherheitsabstand an beiden Seiten des Bauteils 3 übersteigt.

Zusätzlich oder alternativ kann um das Leitungselement 4 eine Brandschutz-Abdeckung oder Ummantelung 13 vorgesehen sein, die ebenfalls in axialer Richtung länger ist als es der Dicke d des Bauteils 3 entspricht, und die sich ebenfalls beidseitig des Bauteils 3 um einen vorbestimmten Sicherheitsabstand aus der Öffnung 2 heraus erstreckt. Sowohl der Anstrich 12 als auch die Ummantelung 13 erfolgen durch herkömmliche Materialien. So wird beispielsweise für den Anstrich 12 ein aufschäumbarer Dämmschichtbildner eingesetzt, während die Ummantelung 13 beispielsweise eine Kabelbandage sein kann. Die Zwischenräume zwischen verschiedenen Leitungselementen 4 im Bereich der Öffnung 2 können, wie üblich, mit einer geeigneten, handelsüblichen Brandschutz-Paste verschlossen werden, die im Brandfall aufschäumt.

Bei einem praktischen Brandversuch unter Verwendung der intumeszierenden Matte wurde bei einer dreilagigen Ausführung ein Feuerwiderstand von 60 min. gemessen. Das erfindungsgemäße Schott erfüllt somit z. B. Anforderungen, die eine Widerstandszeit gegen Feuer und Rauch von 30 bis 60 min verlangen.

In Abwandlung des beschriebenen und bezeichneten Ausführungsbeispiels kann in gleicher Weise auch eine Deckendurchführung aufgebaut sein. Anstelle der intumeszierenden Matte oder der Kabelvollbandage können andere herkömmliche Lagen aus einem beschichteten, flächigen Träger für Brandschutzzwecke eingesetzt werden. Bei mechanisch weniger beanspruchten Konstruktionen kann die Abdeckung entfallen. Ggf., insbesondere bei nicht brennbaren Rohren, könnte der Anstrich und/oder die Ummantelung entfallen.

## Patentansprüche

1. Schott (1) für eine Bauteildurchführung von wenigstens einem Leitungselement (4), mit einem eine Bauteilöffnung (2) überspannenden Brandschutzmaterial (5), durch das das Leitungselement (4) hindurchgeführt ist, **dadurch gekennzeichnet, dass** das Brandschutzmaterial (5) durch wenigstens eine Brandschutzlage (6) eines flächigen, flexiblen Trägers (7) in Form einer Bahn oder Matte gebildet ist, der mit einem im Brandfall aufschäumenden, dämmschichtbildenden Material (8) unter Verwendung von Blähgrafit beschichtet und an einer Tragkonstruktion (9) in Form eines Rahmens um die Öffnung (2) herum montiert ist, und dass eine Abdeckung (11) aus einem nicht brennbaren Material für das Brandschutzmaterial (5) vorgesehen ist.

2. Schott nach Anspruch 1, **dadurch gekennzeichnet, dass** der Träger (7) aus einem nicht brennbaren Material besteht.

3. Schott nach Anspruch 1, **dadurch gekennzeichnet, dass** der Träger (7) aus einen Fasergebilde, insbesondere einem Trägergewebe, besteht.

4. Schott nach einem der Ansprüche 1 bis 3, **dadurch gekennzeichnet, dass** beidseitig des Brandschutzmaterials (5) eine Abdeckung (11) vorgesehen ist.

5. Schott nach einem der Ansprüche 1 bis 4, **dadurch gekennzeichnet, dass** die Abdeckung (11) mit einer Schicht aus einem Dämmschichtbildner versehen ist.

6. Schott nach einem der Ansprüche 1 bis 5, **gekennzeichnet durch** seine Verwendung mit einem Leitungselement (4), das wenigstens im Bereich der Bauteildurchführung mit einem Brandschutz-Anstrich (12) versehen ist.

7. Schott nach einem der Ansprüche 1 bis 6, **gekennzeichnet durch** seine Verwendung mit einem Leitungselement (4), das wenigstens im Bereich der Bauteildurchführung mit einer Brandschutz-Umhüllung (13) versehen ist.

## Claims

1. Partition (1) for a component feed-through of at least one conducting member (4), having a fire protection material (5) spanning a component opening (2), through which the conducting member (4) is fed, **characterised in that** the fire protection material (5) is formed by at least one fire protection layer (6) of a planar, flexible carrier (7) in the form of a web or mat, which is coated using expanded graphite with an intumescent material, which foams in the event of a fire, and is mounted around the opening (2) on a carrier structure (9) in the form of a frame and **in that** a cover (11) made of a non-flammable material is provided for the fire protection material (5).

2. Partition according to Claim 1, **characterised in that** the carrier (7) consists of a non-flammable material.

3. Partition according to Claim 1, **characterised in that** the carrier (7) consists of a fibre structure, in particular a carrier fabric.

4. Partition according to any one of Claims 1 to 3, **characterised in that** a cover (11) is provided on both sides of the fire protection material (5).

5. Partition according to any one of Claims 1 to 4, **characterised in that** the cover (11) is provided with an intumescent coat.

6. Partition according to any one of Claims 1 to 5, **characterised by** its use with a conducting member (4), which is provided with a fire protection coating (12) at least in the region of the component feed-through.

7. Partition according to any one of Claims 1 to 6, **characterised by** its use with a conducting member (4), which is provided with a fire protection sheathing (13) at least in the region of the component feed-through.

## Revendications

1. Cloison (1) pour la traversée d'un composant structurel par au moins un élément de conduite (4), comportant un matériau ignifuge (5) qui recouvre un orifice du composant structurel (2) et à travers lequel l'élément de conduite (4) est passé, **caractérisée en ce que** le matériau ignifuge (5) est constitué d'au moins une couche ignifuge (6) d'un support plan flexible (7) présentant une forme de piste ou de plaque et recouvert à l'aide de graphite expansé avec un matériau (8) formant une couche isolante et produisant une mousse en cas d'incendie, monté sur une construction de support (9) présentant une forme de cadre et entourant l'orifice, et **en ce qu'**un recouvrement (11) constitué d'un matériau non inflammable est pourvu pour le matériau ignifuge (5).

2. Cloison selon la revendication 1, **caractérisée en ce que** le support (7) est constitué d'un matériau non inflammable.

3. Cloison selon la revendication 1, **caractérisée en ce que** le support (7) est constitué d'une structure fibreuse, et en particulier d'un tissu de support.

4. Cloison selon l'une des revendications 1 à 3, **caractérisée en ce que** le matériau ignifuge (5) est pourvu d'un recouvrement (11) sur ses deux faces.

5. Cloison selon l'une des revendications 1 à 4, **caractérisée en ce que** le recouvrement (11) est pourvu d'une couche en matériau intumescent.

6. Cloison selon l'une des revendications 1 à 5, **caractérisée par** son utilisation avec un élément de conduite (4) qui est pourvu d'un revêtement ignifuge (12) au moins dans la zone de la traversée du composant structurel.

7. Cloison selon l'une des revendications 1 à 6, **caractérisée par** son utilisation avec un élément de conduite (4) qui comporte une enveloppe ignifuge (13) au moins dans la zone de traversée du composant structurel.
